Europäisches Patentamt

**European Patent Office**

**Office européen des brevets**

(11) Veröffentlichungsnummer: **0 225 480**
**B1**

(12) **EUROPÄISCHE PATENTSCHRIFT**

(45) Veröffentlichungstag der Patentschrift:
**28.03.90**

(51) Int. Cl.⁴: **B60Q 1/04**

(21) Anmeldenummer: **86115296.5**

(22) Anmeldetag: **05.11.86**

(54) **Fahrzeugscheinwerfer.**

(30) Priorität: **10.12.85 DE 3543563**

(43) Veröffentlichungstag der Anmeldung:
**16.06.87 Patentblatt 87/25**

(45) Bekanntmachung des Hinweises auf die Patenterteilung:
**28.03.90 Patentblatt 90/13**

(84) Benannte Vertragsstaaten:
**AT ES FR GB IT SE**

(56) Entgegenhaltungen:
**US-A- 4 133 246**

(73) Patentinhaber: **Hella KG Hueck & Co., Postfach 28 40,
D-4780 Lippstadt(DE)**

(72) Erfinder: **Ahle, Bernhard, Ernst-Moritz-Arndt-Strasse 6,
D-4788 Warstein(DE)**
Erfinder: **Kathmann, Franz, Robert-Koch-Strasse 36,
D-4780 Lippstadt(DE)**
Erfinder: **Marks, Hubert, In der Helle 18,
D-4787 Geseke 2(DE)**
Erfinder: **Pokraka, Gerd, Einsteinstrasse 32,
D-4780 Lippstadt 6(DE)**
Erfinder: **Schmitz, Konrad, Westring 5,
D-4780 Lippstadt 8(DE)**
Erfinder: **Sellmann, Josef, Gieselerweg 9,
D-4782 Erwitte(DE)**
Erfinder: **Wigger, Hermann-Josef, Salzkottener
Strasse 88, D-4780 Lippstadt-Esbeck(DE)**

ACTORUM AG

## Beschreibung

Die Erfindung bezieht sich auf einen Fahrzeugscheinwerfer, dessen aus einem spröden Kunststoff hergestellter Reflektor um mindestens eine durch zwei kugelgelenkartige Schwenkpunkte gebildete Achse verstellbar in einem Aufnahmeteil gelagert ist.

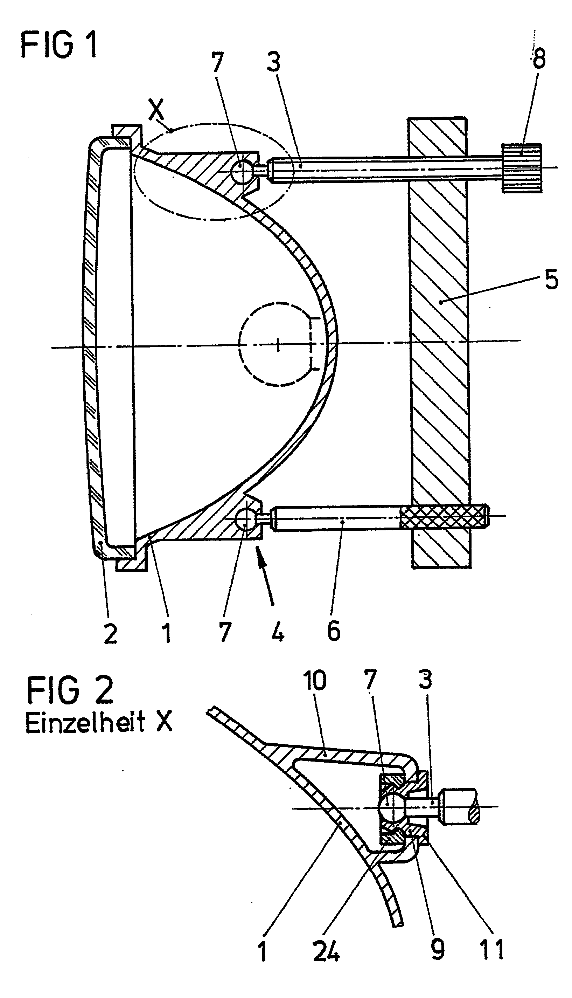

Ein solcher bekannter Fahrzeugscheinwerfer ist in Figur 1 und Figur 2 der Zeichnung dargestellt. Der Kugelkopf der kugelgelenkartigen Schwenkpunkte ist an dem freien Ende einer an dem Aufnahmeteil verstellbar geführten Einstellschraube und bei dem Festpunkt an dem freien Ende eines in dem Aufnahmeteil festgesetzten Bolzens angeschlagen. Der Kugelkopf ist in eine hülsenförmige Gelenkschale selbstrastend eingesetzt. Die mit dem Kugelkopf gelenkig verbundene hülsenförmige Gelenkschale ist in eine Öffnung eines auf der Reflektorrückseite angeformten bogenförmigen Abschnittes bis zu einem umlaufenden Außenflansch der Gelenkschale eingeschoben. Auf den durch die Öffnung hindurchgeschobenen Abschnitt der hülsenförmigen Gelenkschale ist ein elastischer Ring aufgeschoben, der in eine umlaufende Nut der hülsenförmigen Gelenkschale selbstrastend eingreift und somit die hülsenförmige Gelenkschale in der Öffnung des bogenförmigen Abschnittes festsetzt. In der Praxis hat es sich gezeigt, daß wegen dem aus fließtechnischen Gründen nur eine relativ schwache Wandung aufweisende, Bogenabschnitt des Reflektors die Randbereiche der die Gelenkschale aufnehmende Öffnung ausbrechen können oder durch den spröden Kunststoff des Reflektors der Abrieb zwischen der Kugelschale und dem Randbereich der Öffnung so groß ist, daß kein sicherer Festsitz der Kugelschale am Reflektor gewährleistet ist. Außerdem ist durch den die Kugelschale festsetzenden zusätzlichen elastischen Ring die Montage der kugelgelenk artigen Schwenkpunkte umständlich und zeitaufwendig. Ferner sind für die Herstellung des auf der Rückseite des Reflektors angeformten bogenförmigen, die Öffnung aufweisenden Abschnittes verstellbare Werkzeugteile notwendig.

Aufgabe der Erfindung ist es, die Gelenkschale der kugelartigen Schwenkpunkte des im Gattungsbegriff beschriebenen Fahrzeugscheinwerfers so auszubilden, daß der Gelenkkopf funktionssicher von ihr gehalten ist und ihre Befestigung in einer Aufnahme des Reflektors sicher und weiterhin so durchgeführt ist, daß weder beim Einzetzen der Gelenkschale in die Aufnahme des Reflektors noch beim Verschwenken des Reflektors starke radial gerichtete Kräfte auf die Kugelgelenkaufnahme einwirken, Darüber hinaus soll bei einer kostengünstig herstellbaren Kugelgelenkaufnahme das Einsetzen der Gelenkschale in die Kugelgelkaufnahme einfach und schnell durchführbar sein. Diese Aufgabe wird nach der Erfindung durch folgende Merkmale gelöst.

a) die Gelenkschale des jeweiligen Kugelgelenks ist hülsenförmig ausgeführt und in einen an den Reflektor angeformten hülsenförmigen Ansatz eingeschoben,

b) die Mantelfläche der hülsenförmigen Gelenkschale liegt an der Innenseite des hülsenförmigen Ansatzes mit leicht verformbaren Abschnitten unter Vorspannung an,

c) die entgegen der Einschubrichtung der hülsenförmigen Gelenkschale gerichtete Fläche des hülsenförmigen Ansatzes dient als Anlagefläche für einen Außenflansch der hülsenförmigen Gelenkschale,

d) die Gelenkschale weist mindestens eine in radialer Richtung zur Hülsenachse am Ende eines Federarmes angebrachte federnde Rastnase auf, die in eine Hinterschneidung der Wandung des hülsenförmigen Ansatzes eingreift,

d) die Länge des Federarmes ist um ein Vielfaches größer als die Wandstärke des Federarmes.

Bei einer solchen Lösung ist nach dem selbstrastenden Verbinden der hülsenförmigen Gelenkschale mit dem Kugelkopf die hülsenförmige Gelenkschale durch Einschieben in den hülsenförmigen Ansatz selbstrastend mit dem Reflektor verbindbar. Durch die leicht verformbaren Abschnitte auf der Mantelfläche der hülsenförmigen Gelenkschale sind die radial gerichteten Kräfte auf den hülsenförmigen Ansatz so klein, daß weder ein Abrieb zwischen der hülsenförmigen Gelenkschale und dem aus spröden Kunststoff hergestellten hülsenförmigen Ansatz des Reflektors entsteht noch eine Rißbildung in der Wandung des hülsenförmigen Ansatzes möglich ist. Ferner kann die in eine Hinterschneidung der Wandung des hülsenförmigen Ansatzes des Reflektors eingreifende Rastnase relativ lang ausgeführt sein, da der Federweg des die Rastnase tragenden freien Endes des Federarmes in radialer Richtung relativ groß ist.

Weiterhin ist es vorteilhaft, wenn die Innenfläche des hülsenförmigen Ansatzes, an der die hülsenförmige Gelenkschale abschnittsweise anliegt, sich in Einsetzrichtung der hülsenförmigen Gelenkschale konisch verjüngt. Dadurch ist der Festsitz der hülsenförmigen Gelenkschale in dem hülsenförmigen Ansatz sehr sicher. Ein weiterer Vorteil ist es, wenn die Rastnase von einem außen an die Gelenkschale angeformten Arm getragen wird, der zumindest mit seinem Endabschnitt in etwa parallel zur Mittelachse der Gelenkschale verläuft und in Einsetzrichtung der Gelenkschale weist. Bei einer solch einfachen Ausführungsform ist es zweckmäßig, wenn die hülsenförmige Gelenkschale auf ihre Mantelfläche eine in Einsetzrichtung der Gelenkschale verlaufende Nut aufweist, die beim Einsetzen der Kugelschale in den hülsenförmigen Ansatz als Führung für die Rastnase dient. Dadurch ist nach dem Einschieben der hülsenförmigen Gelenkschale in den hülsenförmigen Ansatz das Einrasten der Rastnase in die Hinterschneidung des hülsenförmigen Ansatzes sichergestellt. Ebenfalls ist es vorteilhaft, wenn die elastisch nachgiebigen Abschnitte der hülsenförmigen Gelenkschale oberhalb und unterhalb des die Kugelschale bildenden Bereichs angeordnet sind und von auf ihrer Mantelfläche angeformten umlaufenden und in radialer Richtung sich verjüngenden Ringen gebildet sind. Dabei ist es vorteilhaft, wenn die Ringe im Querschnitt dreieckig sind. Eine solche Lösung ist sehr einfach und sehr kostengünstig herstellbar. Außerdem sind durch die Anordnung der Ringe oberhalb und unterhalb des die Kugelschale bildenden Bereichs die auf die Innenseite des hülsenförmigen Ansatzes wirkenden Druckkräfte großflächig verteilt.

In der Zeichnung ist ein bekannter Fahrzeugscheinwerfer, der bei der Bildung des Oberbegriffs herangezogen wurde, und die Erfindung dargestellt.

Figur 1 zeigt einen vertikalen Schnitt durch einen schematisch dargestellten Fahrzeugscheinwerfer mit einer Einstellschraube und einem Festpunkt, während

Figur 2 eine Einzelheit X des kugelgelenkartigen Schwenkpunktes des bekannten Fahrzeugscheinwerfers,

Figur 3 eine Einzelheit X des kugelgelenkartigen Schwenkpunktes des Fahrzeugscheinwerfers nach der Erfindung und

Figur 4 eine Ansicht aus Richtung Y auf den hülsenförmigen Ansatz des Reflektors, der als Aufnahme für das Kugelgelenk dient, darstellen.

Der in Figur 1 der Zeichnung schematisch dargestellte Fahrzeugscheinwerfer besteht im wesentlichen aus einer das Innere des Relektors (1) abdeckenden Lichtscheibe (2) und zwei Einstellschrauben (3) und einem Festpunkt (4), die den Reflektor (1) mit dem Aufnahmeteil (5) verbinden. Der Reflektor (1) ist durch die Einstellschrauben (3) um zwei senkrecht zueinander verlaufende Achsen verschwenkbar. Dabei gehen beide Verschwenkachsen durch den Festpunkt (4). Die Einstellschrauben (3) sind in dem Aufnahmeteil (5) verschraubbar geführt, und der von einem Bolzen (6) gebildete Festpunkt (4) ist durch eine Rändelung an dem einen freien, in eine Öffnung des Aufnahmeteils (5) im Preßsitz eingeschobenen Ende festgesetzt. Das andere freie Ende des Bolzens (6) und die zum Reflektor (1) hinweisenden freien Enden der Einstellschrauben (3) weisen je einen angeschlagenen Kugelkopf (7) auf. Die Kugelköpfe (7) sind in je einer Aufnahme des Reflektors (1) eingesetzt und in dieser verschwenkbar gelagert. Auf den nach hinten weisenden freien Enden der Einstellschrauben (3) ist je ein Griffteil (8) festgesetzt. Der in Figur 2 dargestellte kugelgelenkartige Schwenkpunkt eines bekannten Fahrzeugscheinwerfers besteht aus einer hülsenförmigen, aus elastischem Kunststoff hergestellten Gelenkschale (9), die auf dem an die Einstellschraube (3) bzw. and den Bolzen (6) des Festpunktes angeschlagenen Kugelkopf (7) selbstrastend aufgeschoben ist. Die hülsenförmige Gelenkschale (9) ist mit dem eingesetzen Kugelkopf (7) in eine Öffnung eines bogenförmigen Abschnittes (10), der an die Rückseite des aus sprödem Kunststoff hergestellten Reflektors (1) angeformt ist, bis zu ihrem umlaufenden Außenflansch (11) eingeschoben. Auf den durch die Öffnung hin durchgesteckten Abschnitt der hülsenförmigen Gelenkschale (9) ist ein elastischer Ring (24) aufgeschoben, der in eine umlaufende Nut der hülsenförmigen Gelenkschale selbstrastend eingreift und der mit seiner in Einsetzrichtung weisenden Stirnfläche an den bogenförmigen Abschnitt (10) des Reflektors drückt. Dadurch ist die hülsenförmige Gelenkschale (9) fest in der Öffnung des bogenförmigen Abschnittes (10) des Reflektors eingespannt.

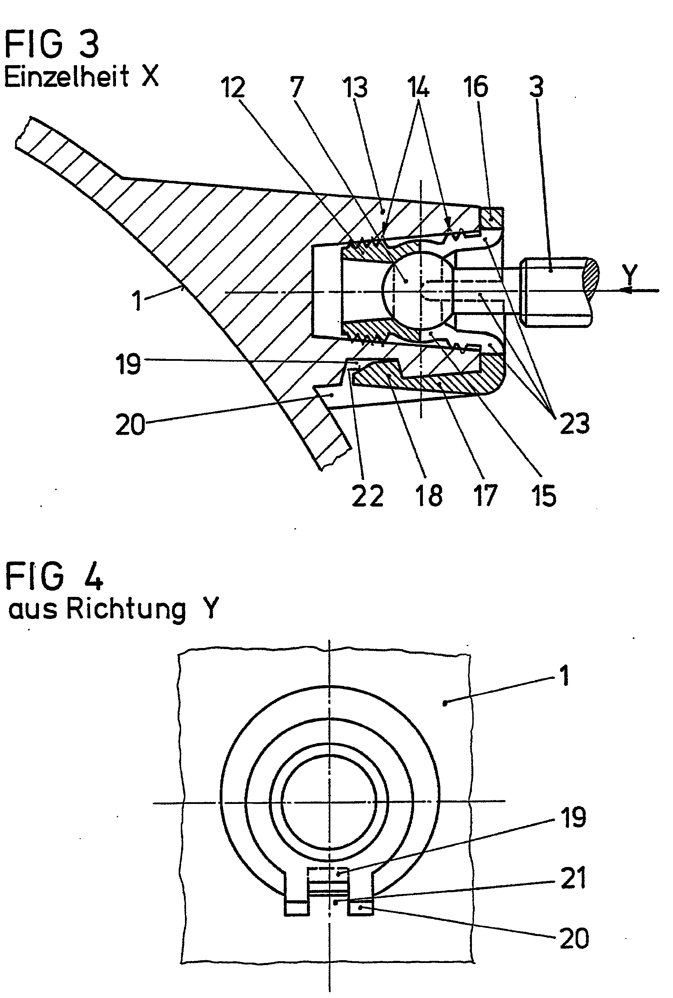

Figur 3 der Zeichnung zeigt den kugelgelenkartigen Schwenkpunkt des Fahrzeugscheinwerfers nach der Erfindung. Die hülsenförmige Gelenkschale (12) ist in einen hülsenförmigen, an den aus spröden Kunststoff hergestellten Reflektor angeformten Ansatz (13) eingeschoben. Die hülsenförmige Gelenkschale (12) und der hülsenförmige Ansatz (13) verjüngen sich in Einsetzrichtung der Gelenkschale im wesentlichen konisch. Oberhalb und unterhalb des in die hülsenförmige Gelenkschale (12) eingesetzten Kugelkopfes (7) der Einstellschraube (3) weist die Gelenkschale aur ihrer Mantelfläche angeformte unlaufende Ringe (14) auf, die sich derart in radialer Richtung zur Hülsenachse nach außen verjüngen, daß ihr Querschnitt dreieckig ist. Beim Einschieben der Gelenkschale (12) in den hülsenförmigen Ansatz (13) werden die Spitzen (gestrichelt dargestellt) der im Querschnitt dreieckigen Ringe (14) verformt. Dabei ist es vorteilhaft, wenn nach der Verformung die Ausdehnung der Ringe (14) in radialer Richtung so groß ist, daß der durch die Kugelschale (15) gebildete bauchige Abschnitt auf der Mantelfläche der hülsenförmigen Gelenkschale (12) nicht an der Innenseite des hülsenförmigen Ansatzes (13) zur Anlage kommt. Dadurch wirken auf die Innenseite des hülsenförmigen Ansatzes (13) nur die Kräfte der relativ leicht verformbaren Ringe (14).

Die hülsenförmige Gelenkschale (12) wird bis zu ihrem umlaufenden Außenflansch (16) in den hülsenförmigen Ansatz (13) eingeschoben. An den Außenflansch (16) der hülsenförmigen Gelenkschale (12) ist ein Federarm (17) angeformt, der mit seiner Längsrichtung in etwa parallel zur Mittelachse der Gelenkschale (12) verläuft und in Einsetzrichtung der Gelenkschale (12) weist. An dem freien Ende des Federarms (17) ist eine Rastnase (18) angeformt, die in einer in der Mantelfläche des hülsenförmigen Ansatzes (13) eingebrachten Vertiefung (19) eingreift. Beiderseits des Federarms (17) sind an der Mantelfläche des hülsenförmigen Ansatzes (13) Rippen (20) angeformt, die beim Einsetzen der Gelenkschale (12) in den hülsenförmigen Ansatz (13) eine Führungsnut (21) für die Rastnase (18) bilden. Die Rastnase (18) weist auf der in Einsetzrichtung der Gelenkschale (12) weisenden Seite eine Auflaufschräge (22) auf.

Um die Gelenkschale mit dem Kugelkopf selbstrastend verbinden zu können, sind in die Gelenkschale (12) vom Außenflansch (16) bis zur Kugelschale (15) sich erstreckende Schlitze (23) in die Wandung der Gelenkschale eingebracht.

## Patentansprüche

1. Fahrzeugscheinwerfer, dessen aus einem spröden Kunststoff hergestellter Reflektor (1) um mindestens eine durch zwei kugelgelenkartige Schwenkpunkte (7) gebildete Achse (3, 6) verstellbar in einem Aufnahmeteil (5) gelagert ist, gekennzeichnet durch folgende Merkmale:

    a) die Gelenkschale (12) des jeweiligen Kugelgelenks ist hülsenförmig ausgeführt und in einen an den Reflektor (1) angeformten hülsenförmigen Ansatz (13) eingeschoben,

    b) die Mantelfläche der hülsenförmigen Gelenkschale (12) liegt an der Innenseite des hülsenförmigen Ansatzes (13) mit leicht verformbaren Abschnitten unter Vorspannung an,

    c) eine entgegen der Einschubrichtung der hülsenförmigen Gelenkschale (12) gerichtete Fläche des hülsenförmigen Ansatzes (13) dient als Anlagefläche für einen Außenflansch (16) der hülsenförmigen Gelenkschale (12),

    d) die Gelenkschale (12) weist mindestens eine in radialer Richtung zur Hülsenachse am Ende eines Federarms (17) angebrachte federnde Rastnase (18) auf, die in eine Hinterschneidung (19) der Wandung des hülsenförmigen Ansatzes (13) eingreift,

    e) die Länge des Federarms (17) ist um ein Vielfaches größer als die Wandstärke des Federarms.

2. Fahrzeugscheinwerfer nach Anspruch 1, dadurch gekennzeichnet, daß die Innenfläche des hülsenförmigen Ansatzes (13), an der die hülsenförmige Gelenkschale (12) abschnittsweise anliegt, sich in Einsetzrichtung der hülsenförmigen Gelenkschale (12) konisch verjüngt.

3. Fahrzeugscheinwerfer nach Anspruch 1 oder 2, dadurch gekennzeichnet, daß die Rastnase (18) von einem außen an die Gelenkschale (12) angeformten Arm (17) getragen wird, der zumindest mit seinem Endabschnitt in etwa parallel zur Mittelachse der Gelenkschale (12) verläuft und in Einsetzrichtung der Gelenkschale weist.

4. Fahrzeugscheinwerfer nach Anspruch 3, dadurch gekennzeichnet, daß die hülsenförmige Gelenkschale (12) auf ihrer Mantelfläche eine in Einsetzrichtung der Gelenkschale verlaufende Nut (21) aufweist, die beim Einsetzen der Gelenkschale in den hülsenförmigen Ansatz als Führung für die Rastnase (18) dient.

5. Fahrzeugscheinwerfer nach einem der vorstehenden Ansprüche, dadurch gekennzeichnet, daß die elastisch nachgiebigen Abschnitte (14) der hülsenförmigen Gelenkschale (12) oberhalb und unterhalb des die Kugelschale (15) bildenden Bereichs angeordnet sind.

6. Fahrzeugscheinwerfer nach einem der vorstehenden Ansprüche, dadurch gekennzeichnet, daß die elastisch nachgiebigen Abschnitte (14) der hülsenförmigen Gelenkschale (12) von auf ihrer Mantelfläche angeformten umlaufenden und in radialer Richtung sich verjüngenden Ringen gebildet sind.

7. Fahrzeugscheinwerfer nach Anspruch 6, dadurch gekennzeichnet, daß die Ringe (14) im Querschnitt dreieckig sind.

**Claims**

1. Vehicle headlight, of which the reflector (1), produced from a brittle plastic, is mounted in a receiving part (5) adjustably about at least one axis (3, 6) formed by two balljoint-like pivot points (7), characterized by the following features:

    a) the joint shell (12) of the particular balljoint is made sleeve-shaped and is pushed into a sleeve-shaped extension (13) formed on the reflector (1),

    b) the outer surface of the sleeve-shaped joint shell (12) rests under prestress against the inside of the sleeve-shaped extension (13) by means of slightly deformable portions,

    c) a surface of the sleeve-shaped extension (13) pointing the opposite way to the push-in direction of the sleeve-shaped joint shell (12) serves as a bearing surface for an outer flange (16) of the sleeve-shaped joint shell (12),

    d) the joint shell (12) has at least one resilient detent nose (18) which is formed at the end of a spring arm (17) in the radial direction relative to the sleeve axis and which engages in an undercut (19) of the wall of the sleeve-shaped extension (13),

    e) the length of the spring arm (17) is larger by a multiple than the wall thickness of the spring arm.

2. Vehicle headlight according to Claim 1, characterized in that the inner face of the sleeve-shaped extension (13), against which the sleeve-shaped joint shell (12) rests by portions, narrow conically in the direction of insertion of the sleeve-shaped joint shell (12).

3. Vehicle headlight according to Claim 1 or 2, characterized in that the detent nose (18) is carried by an arm (17) which is formed on the outside of the joint shell (12) and which, at least with its end portion, extends approximately parallel to the mid-axis of the joint shell (12) and points in the direction of insertion of the joint shell.

4. Vehicle headlight according to Claim 3, characterized in that the sleeve-shaped joint shell (12) has, on its outer surface, a groove (21) which extends in the direction of insertion of the joint shell and which serves as a guide for the detent nose (18) when the joint shell is being inserted into the sleeve-shaped extension.

5. Vehicle headlight according to one of the preceding claims, characterized in that the elastically flexible portions (14) of the sleeve-shaped joint shell (12) are arranged above and below the region forming the ball socket (15).

6. Vehicle headlight according to one of the preceding claims, characterized in that the elastically flexible portions (14) of the sleeve-shaped joint shell (12) are formed by encircling, radially narrowing rings formed on its outer surface.

7. Vehicle headlight according to Claim 6, characterized in that the rings (14) are of triangular cross-section.

**Revendications**

1. Projecteur de véhicule automobile, dont le réflecteur (1) fait en une matière plastique cassante est monté dans une partie logement (5) de manière à être réglable par déplacement autour d'au moins un axe (3, 6) formé par deux points d'articulation du genre rotule (7), caractérisé par les caractéristiques suivantes:

a) la cuvette de rotule (12) de la rotule concernée est réalisée en forme de douille et est introduite dans un saillant en forme de manchon (13) formé sur le réflecteur (1),

b) la surface périphérique de la cuvette de rotule en forme de douille (12) s'applique contre le côté intérieur du saillant en forme de manchon (13), cela par des portions facilement déformables, sous précontrainte,

c) une surface du saillant en forme de manchon (13) dirigée contre la direction d'introduction de la cuvette de rotule en forme de douille (12) sert de surface de contact pour un collet extérieur (16) de la cuvette de rotule en forme de douille (12),

d) la cuvette de rotule (12) présente au moins un nez (18) de verrouillage par enclenchement par déformation élastique en direction radiale par rapport à l'axe de la douille, agencé à l'extrémité d'un bras élastique (17), ce nez s'engageant en faisant prise dans une contre-dépouille (19) de la paroi du saillant en forme de manchon (13),

e) la longueur du bras élastique (17) est de plusieurs fois plus grande que l'épaisseur de paroi de ce bras élastique.

2. Projecteur de véhicule automobile selon revendication 1, caractérisé par le fait que la surface intérieure du saillant en forme de manchon (13), contre laquelle la cuvette de rotule en forme de douille (12) s'applique par portions, s'amincit en cône dans la direction d'insertion de la cuvette de rotule en forme de douille (12).

3. Projecteur de véhicule automobile selon revendication 1 ou 2, caractérisé par le fait que le nez de verouillage-enclenchement (18) est porté par un bras (17) qui est formé extérieurement sur la cuvette de rotule (12), et qui, au moins par sa partie extrême, s'étend sensiblement parallèlement à l'axe central de la cuvette de rotule (12) et est dirigé dans la direction d'insertion de la cuvette de rotule.

4. Projecteur de véhicule automobile selon revendication 3, caractérisé par le fait que la cuvette de rotule en forme de douille (12) présente, sur sa surface périphérique, une rainure (21) s'étendant dans la direction d'insertion de la cuvette de rotule et servant de guide pour le nez de verrouillage-enclenchement (18), lors de l'insertion de la cuvette de rotule dans le saillant en forme de manchon.

5. Projecteur de véhicule automobile selon l'une des revendications précédentes, caractérisé par le fait que les portions déformables élastiquement (14) de la cuvette de rotule en forme de douille (12) sont situées au-dessus et en dessous de la région formant la cuvette sphérique (15).

6. Projecteur de véhicule automobile selon l'une des revendications précédentes, caractérisé par le fait que les portions déformables élastiquement (14) de la cuvette de rotule en forme de douille (12) sont formées par des anneaux entourants formés sur sa surface périphérique et s'amincissant en direction radiale.

7. Projecteur de véhicule automobile selon revendication 6, caractérisé par le fait que les anneaux (14) ont une section droite triangulaire.

FIG 1

FIG 2
Einzelheit X

# FIG 3
## Einzelheit X

# FIG 4
## aus Richtung Y